# EUROPEAN PATENT APPLICATION

(11) **EP 2 698 066 A2**
(43) Date of publication of application: **19.02.2014**
(21) Application number: 12770736.2
(22) Date of filing: 30.03.2012
(51) Int. Cl.: A23B 7/16, A23B 9/14, A23P 1/08, B82Y 99/00

(54) **COMPOSITION OF SOLID LIPID NANOPARTICLES FOR THE LONG-TERM CONSERVATION OF FRUITS, VEGETABLES, SEEDS, CEREALS AND/OR FRESH FOODSTUFFS USING A COATING**

(30) Priority: 11.04.2011 MX 2011003856
(71) Applicant: Universidad Nacional Autónoma De México, México, D.F. C.P. 04510 (MX)
(72) Inventor: QUINTANAR GUERRERO, David, C.P. 53250 Naucalpan Estado De México (MX); ZAMBRANO ZARAGOZA, Maria de la Luz, C.P. 54715 Cuautitlán Izcalli Estado De México (MX); ALVAREZ CÁRDENAS, Alfredo, C.P. 54715 Cuautitlán Izcalli Estado De México (MX); MERCADO SILVA, Edmundo, Querétaro (MX)
(74) Representative: Carvajal y Urquijo, Isabel
(86) International application number: PCT/MX2012/000033
(87) International publication number: WO 2012/141566

(57) **Abstract**

The invention relates to a composition of solid lipid nanoparticles taking the form of a nano-coating for natural fresh foodstuffs, such as seeds, cereals, fruits or vegetables, preferably fresh fruits and vegetables which are coated by means of fluidization, immersion or spraying. According to the invention, the composition comprises: (a) solid lipids or wax, (b) emulsifying stabilizing agents, and (c) film-forming materials in an aqueous dispersion or solution. The inclusion of a submicronic lipophilic system in aqueous dispersion allows the application of the composition to be easily controlled since it is a fluid system with low viscosity, which is advantageous in that it can be applied easily and uniformly and provides improved coating properties, such as sheen, mechanical strength and gas permeability *inter alia.*

## Description

### FIELD OF INVENTION

The present invention is related to food conservation techniques by coatings which are applied thereto and more particularly, it relates to a solid lipid nanoparticle composition and a film-forming material mixed with other additives for long-term conservation of fruits, fresh vegetables, whole or minimally processed foodstuffs by coating thereof. The present technology offers as main advantages to extend storage and shelf life and life during food transportation.

### BACKGROUND OF INVENTION

Fruits and fresh vegetables are important components in human diet because of their contents in phytochemicals, commonly called phytonutrients, such as phenolic compounds, carotenes, lycopenes, and others.

The coating is of key importance in fruits and fresh vegetables and minimally processed foodstuffs in order to increase product quality and to extend their shelf life (Lin D. and Zhao Y., 2007) thus, renewable source edible coatings have been used including, lipids, polysaccharides and proteins (Bosquez et.al., 2003).

Fruits and vegetables when coated with any kind of semipermeable membrane on product's surface reach a control in its breathing process. This type of membrane acts as steam, O₂ and CO₂ barrier. Currently, coatings are also used as active substance transporters contributing to increase product useful life (Zapata et al., 2008). However, the use of solid lipid nanoparticles for fruit and vegetable coating is not known, as disclosed in present invention, which results advantageous to obtain a more lasting storage keeping the properties of recently harvested produce.

The solid lipid nanoparticles (SLN) may be defined as submicron colloidal solid particles comprising active substances and generally produced by mechanical means.

The SLN have been mainly used in pharmaceutical industry, as colloidal transporters in controlled-release systems in order to achieve spatial location or temporary release effects. They show high physical and chemical stability and their use in several areas may have significant technological implications (Soliva-Fortuny et al., 2009).

The SLN and the nanostructured lipid transporters (NLC) are manufactured by different methods including dispersion of an oily phase comprising several types of solid lipids and/or liquids in an aqueous phase comprising a high rate of surfactants and co-surfactants. High-energy homogenization methods and formation of an emulsifier protective coating around the lipid particles are required to obtain stable nanometric particle dispersions.

There are other additional reported research developments about nutrient bioavailability of nanoencapsulated substances with milk proteins (Levney 2010); obtainment of Quantum Dots from zinc oxide for growth inhibition of *Listeria monocytogenes, E. coli* and *Salmonella* (Jin et al., 2009). Reference is currently made to cellulose nanoparticle development to be used in preparation of sauces and dressings, US patent 2008/0145576. In those above proposals, reference is made to the use of nanoparticles prepared from polymeric materials; however, the solid lipid nanoparticles have not been used for foodstuffs and much less for a specific use as film-forming materials for food coating as referred in present invention. In some other cases, nanoparticles are used as material carriers such as antioxidants from gold nanoparticles (Scampicchio et al., 2006) for use in food enrichment and fortification using vitamins and minerals (Acosta, 2009).

Other patents are known from prior art which include the use of coatings in soy protein, malic acid and glycerol emulsions, US patent 7160580; coatings with wax, polymer and flavonoid emulsion bases, US patent 2009/0142453; stearic acid base coatings, anionic emulsifier and methylparabene, US patent 4649057; and edible coatings with modified starches, protein, cellulose derivatives and stabilizers, EP patent 1654933. Above mentioned coatings have been proposed for use in fruits and fresh vegetables and has been reported effective in prevention of substrate undesirable changes and for extending product useful life. However, these coatings show a disadvantage of being unstable and having limitations for application, mainly on product breathing control, stability and capacity for transporting additives, preservatives and nutraceuticals. Moreover, an important fact to point out is that many of these developed emulsions involve the use of organic solvents which limit their use for direct application on foods due to their toxicological risk, unless present in acceptable concentrations. Some of the current methods are also difficult to be adapted to industrial processes and they have special requirements.

The use of wax is known within the state of the art, said wax includes a melting point from 78 to 85 °C, being higher than natural waxes and comprising fatty acid esters (80-85 %), fatty alcohols (10 to 15 %), acids (3 to 6 %) and hydrocarbons (1 to 3 %); having fatty esterified diols (about 20 %), hydroxylated fatty acids (about 6 %) and cinnamic acid (about 10 %), the latter being an antioxidant. Carnauba wax is used for fruit post-harvest treatments to extend shelf life and to keep appearance and freshness because it decreases transpiration and then inhibits dehydration in certain degree, it also helps to keep them from fungosis and bacteriosis and keeps fruit natural brightness, it is used as "water wax" that is, by forming emulsions. The present invention also refers to a product for post-harvest fruit treatment to extend shelf life, but with the additional advantage of including other active components promoting such shelf life extension.

### OBJECTS OF THE INVENTION

Having in mind the defects and lack in prior art, it is an object of present invention to provide a new solid lipid nanoparticle composition (NLS) with submicron particle sizes between 50 and 900 nm and preferably from 50 to 500 nm being formed as a nano-coating or film used for increasing shelf life, storage and during fresh natural produce transportation such as seeds, cereals, fruits or green vegetables.

A further object of present invention is a solid lipid nanoparticle composition (NLS) for coating foodstuffs keeping its freshness and nutritional properties, protecting them from extreme temperature changes and generally from unfavorable environmental conditions.

It is another object of present invention a solid lipid nanoparticle composition for coating of foodstuff including food conservation enhancing additives such as antioxidants and texture modifier, which may be trapped, dissolved or dispersed in NSL, to be homogeneously integrated in the system once that water is removed and a film is formed.

A further object of present invention is a solid lipid nanoparticle composition for foodstuff coating including additional nutritional agents.

It is still another object of the invention a composition formed as a coating comprising solid lipids, or waxes, at least an ionic or non-ionic emulsifying stabilizing agent and one or more film-forming materials in aqueous solution or dispersion which may be natural or synthetic polymers, proteins or plasticizers and functioning as a coadjuvant in coating homogeneous distribution on fresh food surface.

A further object of present invention is to provide a method for long-term protection of fresh foods, fruits, green vegetables, vegetables and/or seeds, consisting of the application of a solid lipid nanoparticle (NLS) coating from the invention.

An additional object of the invention is to provide a less perishable product by treating it with the nanoparticles of the invention thus easing transportation and keeping a fresh appearance before the consumer.

The main advantage in using nano-coatings based on solid lipid nanoparticles is that as to their particle size and behavior, they have higher stability, higher coating power and a more homogeneous distribution because of their large exposed surface area, these features favor an active homogeneous release and the capacity to encapsulate preserving and nutraceutical substances such as, polyphenols, vitamin E, lycopene, β-carotene, essential oils, and others, the controlled release of these substances during storage and consumption being of benefit for health. Because of these characteristics and the possibility of being used in combination with polymeric materials, a suitable control of permeability and gas exchange barrier properties may be obtained.

### DETAILED DESCRIPTION OF INVENTION

The main advantage in using the nano-coatings based on solid lipid nanoparticles, is that they allow encapsulation of active substances and/or preservatives, and that related to their particle size and behavior, they have higher stability, higher coating power and a more homogeneous distribution due to their large exposed surface area, these features favoring a more homogeneous release of preservative substances or actives encapsulated in these nanoparticles.

The actives may be polyphenols, vitamin E, lycopene, β-carotene, essential oils, and the like; controlled release of these substances during storage and consumption results in conservation of nutritional even nutraceutical properties featured in the fruit or green vegetable, since consumer's health and nutrition are benefited by conserving the features of a well-developed product (fruit).

Due to nano-coating characteristics and to the possibility of use them in combination with polymeric materials, a suitable property control may be obtained thus allowing functioning as a permeability and gas exchange barrier.

The present invention relates to long-term conservation of fruits, preferably climacteric fruits such as guava, melon, citrus and fresh vegetables, vegetables, green vegetables or fresh or processed foods such as grains, seeds, oilseeds, green vegetables and meat, by coating with solid lipid nanoparticles. The following mixture is made for preparation of a nano-coating based on solid lipid nanoparticles with submicron particle sizes between 50 and 900 nm and preferably from 50 to 500 nm of solid lipids at room temperature obtained by mechanical means:
a) Natural waxes, carnauba wax, candelilla wax, whale sperm, beeswaxs, lanolin, wool wax, Chinese wax, oil-derived waxes such as microcrystalline wax, paraffin wax or mixed with other lipids such as sunflower oil, soybean oil, lecithin and lecithin derivatives, and other food use materials are used, forming the nano-coating functional basis,
b) Food-use stabilizing agents such as non-ionic emulsifiers are added: monoglycerides, diglycerides, medium-chain glycerides, glyceryl laurate, poloxamers, lecithin; fatty acid esters such as sorbitan monolaurate (tween 20), sorbitan monostearate (Tween 60) and sorbitan monooleate (Tween 80), sorbitan monolaurate (Span 20), poly(vinil)alcohol, pluronic-127, acrylamides, silicone-base surfactants, sorbitol derivatives, and the like and as ionic emulsifiers: sodium lauryl sulfate, phospholipids and alginate salts. The emulsifier may be used alone or in combination and integrated into the formulation as agents used in the preparation of solid lipid nanoparticles or as dispersion stabilizers during storage or application;
c) Film-forming materials in solution or aqueous dispersion are added in a 0.1 to 5.0 % by weight ratio such as:
   i. polysaccharides (xanthan gum, guar gum, tragacanth gum, mesquite gum, plant origin mucilages, modified starches, alginates, carrageenans, maltodextrins, gellan and the like);
   ii. Synthetic polymers (Eudragit RL, Eudragit RS, polyvinylalcohol, polyvinylpyrrolidone, polyvinylacetate, polyvinylacetate and povidone ethylcellulose mixtures, polyvinyl acetate terephtalate, carboxymethylcellulose, hydroxyethylcellulose, hydroxypropylmethylcellulose, methylcellulose, hydroxypropylcellulose, methacrylates, cellulose acetate phtalate, polyvinyl acetate phtalate, methacrylic acid copolymers, polyethylmethacrylate, polybutylmethacrylate, poly isobutyl methacrylate, poly hexyl methacrylate, polyisodecylmethacrylate, polylaurylmethacrylate, polyphenylmethacrylate, polymethylacrylate, polyisopropylacrylate, polyisobutylacrylate, polyoctadecylacrylate, polyethylene, polyethylene oxide, hydroxypropylmethylcellulosephtalate, methylhydroxyethylcellulose, povidone, sodium carboxymethylcellulose, Shellac or any similar polymer with film-forming activity).
   iii. Natural origin proteins such as zein, gluteins, caseins and their derivatives, soy protein, milk whey proteins, and the like.
   iv. Plasticizers which may be selected from polyethylene glycol (PEG generally of 200-6000 degress), triacetin, glycerol, phtalate esters (diethyl, dibutyl); citrate esters (triethyl, acetyltriethyl, acetyl tributyl; castor oil, acetylated monoglycerides, fractionated coconut oil, glycerol, fructose, sucrose, sorbitol or any other plasticizer with similar activity. Plasticizer functionality is to provide mechanical strength and stretching capability to the film, and they are applied in a ratio from 0.1 to 5.0 % by weight of film.
   v. Moreover, the composition of present invention may optionally include the use of substrate texture modifiers such as sulfates and sulfonates, fatty acids, alcohols, calcium lactate, calcium carbonate, and the like; antioxidant agents such as α-tocoferol, ascorbic acid, palmitate, extracts and essential oils such as eugenol, rosemary, oregano, cinnamon, and the like, which may be controlled-release during fresh fruit storage and which contribute to keep the natural antioxidants present in the substrate, such as phytochemicals, including polyphenols, flavonoids and other substances of interest in human health. Furthermore, the fact that they contain antioxidants also contributes to the inhibition of enzymatic darkening.
   vi) The present invention may also consider the use of substances which decrease fresh fruit breathing activity, for example, the use of ethylene inhibitors such as auxins, polyamines or jasmonates, the latter being specially for climacteric fruits such as guava, avocado, papaya, mango, and the like, as well as aroma enhancers such as malic acid. The mixture of nanoparticles may also include nutraceutical substances acting as enrichment, reconstitution and addition means of vitamins and other compounds such as polyphenols, quercetin, flavonoids, polyphenols, and the like. Other optional agents which together with xanthan gum may function as damage protectors due to low temperatures are glycerol, sucrose, fructose, sorbitol, mannitol, and the like.
d) The mixture so obtained is prepared as a solid lipid nanoparticle suspension in a film-forming aqueous system; the mixture may be then applied whether by fluidization, immersion, spraying and/or roll impregnation; so that a smooth coating on product surface to be coated is achieved, that being fruit, fresh vegetables, seeds, oilseeds, green vegetables and/or meat; and where the wax concentration may be varied between 0.1 to 60% regarding total coating weight. The agents which may function as enhancing additives may be trapped in the solid lipid nanoparticles or dissolved or dispersed within the dispersion to be homogeneously comprised in the system once that water is removed and a film is formed.

### EXAMPLES

The present invention will be better understood from the following examples, which are only presented with illustrative purposes providing a full understanding of the preferred embodiments of present invention, without excluding other non-illustrated embodiments which may be practiced based on above detailed description. The examples shall not be considered as limitative of the scope of the invention in any way.

### Example 1

Process for long-term conservation of fruits, characterized by application of solid lipid nanoparticles based on a mixture of candeuba wax (initial wax concentration of 10 %) for application on Mid-chinese guava variety surface (*Psidium guajava*), with addition of xanthan gum as film-forming material (coadjuvant in coating homogeneous distribution on fruit surface) in a relation from 0.1 to 0.5 % by weight and, propylene glycol as plasticizer in a relation from 0.1 to 0.5 % by weight of film. Used solid lipid nanoparticles have an average size of 250 nm, the applied coating amount (g/cm²) on fruit surface is determined, which presents a smooth distribution of 0.06 g/cm², causing a cryoprotective effect over the product stored at 10°C.

In order to support the beneficial use of solid lipid nanoparticles, a scheduled sampling was performed to assess and follow-up the weight, color and texture changes along four weeks of storage at 10°C. In order to assess the nanoparticle effectiveness different ratios were applied equivalent to a wax concentration between 6 and 8 % based on a nanoparticle dispersion at 10%, a control was carried with refrigerated samples which were extracted from cold environment and stored during 3 days at room temperature (25°C), in order to establish the coating effectiveness to delay guava ripening without physiological damage present in the product and which is verified with ripening changes at room temperature.

Obtained results show that until 25 days of storage, uncoated guavas showed 10% weight loss regarding those containing 60% of solid lipid nanoparticles, the loss being lower as the solid lipid nanoparticle concentration is increased. Those comprising 80% had a loss of 8%; however, during room temperature storage, the samples with higher solid lipid nanoparticle ratio showed a ripening decrease.

As to the texture, guavas showed an average strength to initial compression of 18 N. Guavas with NLS concentrations of 60, 65, 70 and 75% NLS did not show significant differences (p≥0.05) among them regarding the initial firmness in puncture assays performed up to 10 mm of fruit surface with a maximum puncture strength of 12 N; however, there are significant differences regarding the control guavas and those coated with xanthan gum. At the end of storage (25 days) the coated guavas with 60 and 65% nanoparticle concentration were those keeping their best firmness, while a concentration of 80% of solid lipid nanoparticles does not show a significant difference regarding control guavas.

As part of the application process, the guava fruit was coated by the immersion and spray method; once the coating is applied on fruit surface is subject to drying using air at 30°C and a speed of 4 m/s. The process may be also performed at room temperature. Changes in physicochemical characteristics and fruit weight loss during storage in refrigeration at 8°C and their effect on fruit ripening after the refrigerated storage period at 25°C were assessed.

### Example 2

The following example is applicable to citrus fruits, the typical citrus is lemon.

Beeswax solid lipid nanoparticles (NLS) (initial wax concentration of 10%) were applied on the surface of seedless Tahiti variety lemon *(Citrus latilifolia),* using xanthan gum (0.2 %) as film-forming material (coadjuvant in coating homogeneous distribution on fruit surface) and propylene glycol as plasticizer (0.5%). Used NLS had an average size of 510 nm; different ratios of NLS equivalent to 4, 5 and 6 % by weight of beeswax were applied to lemons with a green pericarp color corresponding to a Hue angle of 136° and a 32 chroma. In order to assess the effect on fruit useful life a periodical sampling was performed during 4 weeks at 10°C, comparing with a control without treatment and another with xanthan gum.

The results showed that after 4 weeks of storage the uncoated lemons showed 18.5% of weight loss regarding those containing 5% of NLS, the loss being lower as the NLS concentration was increased up to 6%.

As to the color changes, a significant quality parameter in lemons, the lemon kept a green color with a NLS concentration of 5% during the two first weeks of storage with a Hue angle of 127° and average chromaticity of 32, without any significant difference (α = 0.05) regarding the coated lemon with 6 % of NLS with a Hue angle of 132° and chromaticity of 30.

In lemons treated with 5% NLS the amount of juice expressed in % relative to fruit weight varied from 47.8 % to 39.3 % at the beginning and end of storage, in case of lemons without treatment the juiciness decreased from 46.3% to 30.4% in average due to changes associated with weight loss which in turn are correlated to shown differences regarding puncture strength. The puncture strength at a distance of 3 mm from lemon surface was 14N initial for all coated and uncoated lemons, however, after two weeks of storage the lemon puncture strength without treatment was increased to an average of 27 ± 4 N, while lemons with 50 and 60 % of NLS the product firmness was kept with a strength of 17 ± 6 N and 15 ± 3 N respectively, indicating the positive effect that NLS have on Persian lemon conservation during refrigerated storage.

### Example 3

The following example is applicable to cereals, being maize the typical cereal.

Application of candeuba wax solid lipid nanoparticles (NLS) (initial wax concentration of 10%) over maize (*Zea mayz L*.) seed surface, using xanthan gum (0.4 %) as film-forming material and propylene glycol (0.5%) as plasticizer. The used solid lipid nanoparticles had an average size of 374 nm, moisture and protein content was determined during storage at room temperature indicating product quality changes.

In order to assess the effect of NLS use, a weekly maize sampling stored during 90 days at 25°C was realized, the effectiveness comparison of NLS was carried out by applying equivalent proportions to 4, 5 and 6 % of candeuba wax determining the moisture and protein content. Seeds without treatment were used as control.

Obtained results show that after 90 days of storage there was a significant difference in moisture contents of the maize seed samples coated with SLN (0.6 %) in respect to control. These results are confirmed with visual changes observed between seeds coated with NLS and those of control.

The % of damaged seeds was 2.4 % for those coated with NLS and 6.7 % for control samples, this damage being considered as the number of seeds floating after water immersion of 100 seeds, indicating that NLS provide a highly protective and preserving edible coating.

According to above description the "solid lipid nanoparticle composition for long-term conservation of fruits, vegetables and/or fresh foodstuff by coating" is noticed to offer higher conservation advantages with perishable products which once coated with a semipermeable membrane on its surface area allow controlling their breathing process.

Therefore, it will be apparent for anyone skilled in the art that the embodiments of the product conservation process are only illustrative but not limiting the present invention, since a number of significant changes in details are possible without separating from the scope of the invention.

Even when certain embodiments of the invention have been illustrated and described it is worth to mention that a number of modifications thereof are possible, but such modifications do not represent a distance from the true scope of the invention. Therefore, the present invention shall not be restricted other than by the state of the art, as well as by the scope of the attached claims.

## Claims

1. A solid lipid nanoparticle composition comprising a nano-coating for increasing shelf life of fresh natural food such as seeds, cereals, fruits or green vegetables, **characterized in that** comprises: a) solid lipids, or wax in a ratio of 0.1 to 60 % regarding the nano-coating film total weight, b) one or more emulsifying stabilizing agents c) one or more film-forming materials in aqueous solution or dispersion in a ratio from 0.1 to 5.0 % by weight functioning as coadjuvant in coating homogeneous distribution on fresh food surface.

2. The solid lipid nanoparticle composition according to claim 1 **characterized in that** the solid lipid nanoparticles have submicron particle sizes ranging from 50 up to 900 nm, being preferably from 50 to 500 nm.

3. The solid lipid nanoparticle composition according to claim 1 **characterized in that** the solid lipids or wax are selected from the group consisting of: natural waxes, carnauba wax, candelilla wax, whale sperm, beeswaxs, lanolin, wool wax, Chinese wax; oil-derived waxes such as microcrystalline wax, paraffin wax or mixed with other lipids such as sunflower oil, soybean oil, lecithin and lecithin derivatives, wherein the wax concentration may range between 0.1 to 60% regarding the total composition weight.

4. The solid lipid nanoparticle composition according to claim 1, **characterized in that** the emulsifying stabilizing agents are ionic or non-ionic agents.

5. The solid lipid nanoparticle composition according to claim 4, **characterized in that** the ionic emulsifying stabilizing agent is selected from the group consisting of sodium lauryl sulfate, phospholipids and alginate salts.

6. The solid lipid nanoparticle composition according to claim 4, **characterized in that** the non-ionic emulsifying stabilizing agent is selected from the group consisting of monoglycerides, diglycerides, medium-chain glycerides, glyceryl laurate, poloxamers, lecithin; fatty acid esters such as sorbitan monolaurate (Tween 20), sorbitan monostearate (Tween 60) and sorbitan monooleate (Tween 80), sorbitan monolaurate (Span 20), poly(vinil)alcohol, pluronic-127, acrylamides, silicone-base surfactants, sorbitol derivatives.

7. The solid lipid nanoparticle composition according to claim 1, **characterized in that** the film-forming materials in aqueous solution or dispersion are selected from the group consisting of polysaccharides, synthetic polymers, proteins and plasticizers functioning as coadjuvant in coating homogeneous distribution on fresh food surface.

8. The solid lipid nanoparticle composition according to claim 7, **characterized in that** the polysaccharides are selected from the group consisting of xanthan gum, guar gum, tragacanth gum, mesquite gum, plant origin mucilages, modified starches, alginates, carrageenans, maltodextrins and gellan.

9. The solid lipid nanoparticle composition according to claim 7, **characterized in that** the synthetic polymers are selected from the group consisting of Eudragit RL, Eudragit RS, polyvinylalcohol, polyvinylpyrrolidone, polyvinylacetate, mixtures of polyvinylacetate with povidone ethylcellulose, polyvinyl acetate terephtalate, carboxymethylcellulose, hydroxyethylcellulose, hydroxypropylmethylcellulose, methylcellulose, hydroxypropylcellulose, methacrylates, cellulose acetate phtalate, polyvinylacetate phtalate, methacrylic acid copolymers, polyethylmethacrylate, polybutylmethacrylate, polyisobutyl methacrylate, polyhexyl methacrylate, polyisodecylmethacrylate, polylaurylmethacrylate, polyphenylmethacrylate, polymethylacrylate, polyisopropylacrylate, polyisobutylacrylate, polyoctadecylacrylate, polyethylene, polyethylene oxide, hydroxypropylmethylcellulosephtalate, methylhydroxyethylcellulose, povidone, sodium carboxymethylcellulose and Shellac.

10. The solid lipid nanoparticle composition according to claim 7, **characterized in that** the proteins are selected from the group consisting of zein, gluteins, caseins and their derivatives, soy protein and milk whey proteins.

11. The solid lipid nanoparticle composition according to claim 7, **characterized in that** the plasticizers are selected from the group consisting of polyethylene glycol (PEG generally of 200-6000 degrees), triacetin, glycerol, phtalate esters (diethyl, dibutyl); citrate esters (triethyl, acetyltriethyl, acetyl tributyl; castor oil, acetylated monoglycerides, fractionated coconut oil, glycerol, fructose, sucrose and sorbitol.

12. The solid lipid nanoparticle composition according to claim 1 **characterized in that** the emulsifying stabilizing agents, the film-forming materials, the polysaccharides, the proteins and the plasticizers may function as enhancing additives which may be trapped in the solid lipid nanoparticles, dissolved or dispersed to be homogeneously integrated in the system once that the water is removed and a film is formed.

13. The solid lipid nanoparticle composition according to claim 1, further **characterized in that** includes at least a substrate texture modifier.

14. The solid lipid nanoparticle composition according to claim 13, **characterized in that** the at least one substrate texture modifier is selected from the group consisting of: sulfates and sulfonates, fatty acids, alcohols, calcium lactate and calcium carbonate.

15. The solid lipid nanoparticle composition according to claim 1, further **characterized in that** includes at least an antioxidant which may be released in a controlled form during fresh food storage.

16. The solid lipid nanoparticle composition according to claim 15, **characterized in that** the at least one antioxidant is selected from the group consisting of: α-tocoferol, ascorbic acid, palmitate, extracts and essential oils such as eugenol, rosemary, oregano and cinnamon.

17. The solid lipid nanoparticle composition according to claim 1, further **characterized in that** includes at least a substance decreasing the fresh fruit breathing activity which may be controlled-release during fresh food storage.

18. The solid lipid nanoparticle composition according to claim 17, **characterized in that** the at least one substance decreasing the fresh fruit breathing activity is selected from the group consisting of: ethylene inhibitors such as auxins, polyamines or jasmonates.

19. The solid lipid nanoparticle composition according to claim 1, further **characterized in that** includes at least an aroma enhancing substance which may be controlled-release during fresh food storage.

20. The solid lipid nanoparticle composition according to claim 19, **characterized in that** the at least one aroma enhancing substance is malic acid.

21. The solid lipid nanoparticle composition according to claim 1, further **characterized in that** includes nutraceutical substances.

22. The solid lipid nanoparticle composition according to claim 1, **characterized in that** comprises: a) candeuba wax with an initial concentration of at least 10% wax, b) xanthan gum as film-forming material in a ratio from 0.1 to 0.5 % by weight and, c) propylene glycol as plasticizer in a ratio from 0.1 to 0.5 % by weight of film and wherein the solid lipid nanoparticles have an average size of 250 nm.

23. The solid lipid nanoparticle composition according to claim 1, **characterized in that** comprises: a) beeswax with an initial concentration of at least 10 % wax, b) xanthan gum as film-forming material in a ratio from 0.2 to 0.4 % by weight and, c) propylene glycol as plasticizer in a ratio from 0.1 to 0.5 % by weight of film and wherein the solid lipid nanoparticles have an average size of 374 nm.

24. A method for long-term protection of fresh foods: fruits, green vegetables, vegetables or seeds, consisting of the application of the solid lipid nanoparticle composition according to claim 1 whether by fluidization, immersion, spraying and/or roll-impregnation.
